# EUROPEAN PATENT SPECIFICATION

(11) **EP 1 778 756 B1**
(45) Date of publication and mention of the grant of the patent: **19.03.2008**
(21) Application number: 05771062.6
(22) Date of filing: 14.07.2005
(51) Int. Cl.: C08G 18/10, C08K 5/435, C08L 75/04, G03G 15/02

(54) **CONDUCTIVE AGENTS FOR POLYURETHANE**
LEITFÄHIGE MITTEL FÜR POLYURETHAN
AGENTS CONDUCTEURS POUR LE POLYURETHANE

(30) Priority: 20.07.2004 US 896075
(43) Date of publication of application: 02.05.2007
(73) Proprietor: Hewlett-Packard Development Company, L.P., Houston, TX 77070 (US)
(72) Inventor: LEE, Shirley, San Diego, California 92127-1899 (US); TANCHANGCO, Daniel, San Diego, California 92127-1899 (US); THOMPSON, John A, Boise, Idaho 83714-0021 (US)
(74) Representative: Dunne, Emma Louise
(86) International application number: PCT/US2005/025054
(87) International publication number: WO 2006/019952

(56) References cited:
- EP-A- 0 686 890
- EP-A- 1 090 939
- EP-A- 1 437 381
- WO-A-02/088251
- PATENT ABSTRACTS OF JAPAN vol. 2003, no. 03, 5 May 2003 (2003-05-05) & JP 2002 338801 A (BANDO CHEM IND LTD), 27 November 2002 (2002-11-27)
- PATENT ABSTRACTS OF JAPAN vol. 2002, no. 09, 4 September 2002 (2002-09-04) & JP 2002 146178 A (SANKO KAGAKU KOGYO KK), 22 May 2002 (2002-05-22)
- PATENT ABSTRACTS OF JAPAN vol. 2003, no. 07, 3 July 2003 (2003-07-03) & JP 2003 065393 A (BANDO CHEM IND LTD), 5 March 2003 (2003-03-05)

## Description

### FIELD OF THE INVENTION

The present invention relates to salts that may be used in polyurethane to impart conductivity.

### BACKGROUND OF THE INVENTION

Electrophotographic ("EP") devices used to form images, such as laser printers, inkjet printers, photocopiers, fax machines and scanners are known in the art. Images are formed with these devices using various techniques. For example, in laser printers and photocopiers, a latent image is created on an insulating, photoconductive roller by selectively exposing portions of the photoconductive roller to light to form exposed and unexposed portions having different electrostatic charge densities. A visible image is formed using electrostatic toners that are selectively attracted to the exposed or unexposed portions depending on the charge of the photoconductive roller or the toner. A sheet of paper or other print medium having an electrostatic charge opposite to the charge on the toner is passed close to the photoconductive roller. The toner is transferred from the photoconductive roller to the paper in the pattern of the image developed from the photoconductive roller. A set of rollers melts and fixes the toner to the paper to produce the printed image.

The conductive components of EP and electrostatic-dissipative devices typically are based on polymers, such as polyurethane elastomers. For example, charge rollers in a laser printer often include a polymer. Polyurethane is used in many electronic appliances and business machines because it possesses mechanical, physical, and chemical properties that meet the functional and environmental demands. Polyurethane is known for its superior toughness, resistance to degradation by oxygen and ozone, and resistance to swelling by hydrocarbons and oils relative to conventional diene-based rubbers. In addition, many polyurethane elastomer compositions have good low temperature flexibility.

However, most polymers do not conduct electricity and static charges, which adversely affect operations of the printer, may build up on the rollers. With the proliferation of electronic materials and digital processing, EP and electrostatic-dissipative devices need protection from the build up of static charges. For instance, electrostatic dissipative materials are needed in flow cells, transducers, actuators, waveguides, electronic components, such as disk drives, liquid crystal displays, intelligent packaging for microelectronics, and business machines to dissipate unwanted electrical charges as well as control electromagnetic interferences.

Therefore, attempts have been made to render such polymer parts electrically conductive. In some cases, a portion of the polymer is coated with an electrically conductive material. Unfortunately, these coatings have short life spans and may be toxic. Another approach involves dispersing an electrically-conductive material in the polymer during fabrication. For example, a conductive roller, such as a developer roller, may be formed of polyurethane and rendered conductive by the addition of lithium perchlorate (LiClO₄) or sodium perchlorate (NaClO₄) to the polyurethane formulation.

However, the perchlorate anion is an oxidizer, considered explosive-prone when contacted by liquid, and the use of LiClO₄ has been attributed the causative factor in accidents. Further, the amount of LiClO₄ necessary to achieve the desired conductivity negatively affects the lifespan of the roller and other components in the EP devices.

Rendering polyurethane conductive is a very desirable material design technology. Many compounds have been added to polyurethane to improve its conductivity, including graphite, carbon black, tertiary ammonium salts, or transition metal chlorides (such as iron chloride (FeCl₃) and copper chloride (CuCl₂)). However, tertiary ammonium salts are too bulky to have an adequately fast relaxation time for high frequency applications such as high speed printing. Transition metal chlorides affect the polyurethane's curing rate and destabilize its longevity.

Thus, it can be appreciated that further improvements are needed for imparting conductivity to components of electrophotographic and electrostatic-dissipative devices.

### BRIEF SUMMARY OF THE INVENTION

Conductive agents that impart conductivity to polyurethane in the range of lithium perchlorate and are stable under electrochemical conditions are disclosed. The conductive agents may be used in polyurethane components that may be incorporated into a variety of devices, including but not limited to, liquid or dry EP devices and semiconductor components.

The conductive agents include at least one of lithium hexafluorophosphate (LiPF₆), methyl triethylammonium tetrafluoroborate (CH₃(C₂H₅)₃NBF₄), and tetraethylammonium tetrafluoroborate ((C₂H₅)4NBF₄).

The present invention also relates to a method of making a conductive polyurethane material. The method includes blending at least one conductive agent in a polyol, wherein at least one conductive agent LiPF₆, CH₃(C₂H₅)₃NBF₄, (C₂H₅)₄NBF₄ and mixtures thereof. The polyol may include at least one moiety selected from the group consisting of EG, (-CH₂-CH₂-O-) or DEG di(ethylene glycol), (-CH₂-CH₂-O-)₂, tri(ethylene glycol) ("TEG"), tetra(ethylene glycol), poly(diethylene glycol), poly(ethylene oxide), and mixtures thereof.

The present invention also relates to a roller including a shaft and a polyurethane material surrounding the shaft wherein the polyurethane material includes a polyol and at least one conductive agent. The polyol may be any known polyol, but preferably those polyols containing moieties mentioned above. The conductive agent is at least one of LiPF₆, CH₃(C₂H₅)₃NBF₄, and (C₂H₅)₄NBF₄.

The present invention further relates to a developer system comprising a developer roller and a power supply in operative communication with the developer roller. The developer roller is a polyurethane material, wherein the polyurethane material includes a polyol and at least one conductive agent, the conductive agent being at least one of LiPF₆, CH₃(C₂H₅)₃NBF₄ and (C₂H₅)₄NBF₄.

The present invention also relates to materials used in an electrophotographic device for forming images, comprising a conductive roller having a polyurethane material, wherein the polyurethane material comprises a polyol and at least one conductive agent, the conductive agent including at least one of LiPF₆, CH₃(C₂H₅)₃NBF₄ and (C₂H₅)₄NBF₄.

### BRIEF DESCRIPTION OF THE SEVERAL VIEWS OF THE DRAWINGS

While the specification concludes with claims particularly pointing out and distinctly claiming that which is regarded as the present invention, the present invention can be more readily ascertained from the following description of the invention when read in conjunction with the accompanying drawings, in which:

Fig. 1 is a schematic illustration of an embodiment of an aspect of the invention having chelate rings formed from carbon-polyether dipolar interactions of a lithium cation with methylene oxide ("MO"), DEG, or butanediol ("BDO");

Fig. 2 depicts a schematic sectional view of one particular embodiment of a roller;

Fig. 3 is a schematic cross-section of one particular embodiment of an electrophotographic device;

Fig. 4 is an aspect of an embodiment of the invention,specifically the resistivity of various concentrations of lithium salts in polyester polyurethane; and

Fig. 5 shows an aspect of an embodiment of the invention, specifically the volume resistivities of polyurethane materials as a function of LiClO4 concentration.

### DETAILED DESCRIPTION OF THE INVENTION

Conductive agents that impart conductivity to a polyurethane material in the range of lithium perchlorate and are stable under electrochemical conditions are disclosed.
The conductive agent includes LiPF₆, CH₃(C₂H₅)₃NBF₄ or (C₂H₅)₄NBF₄ or mixtures thereof. These salts are available commercially, for example, through LithChem International of Anaheim, California. The quantity of the conductive agent may vary between about 0.01 wt% to 10 wt%. In one particular embodiment, the concentration of the conductive agent ranges between about 0.01 wt% to 5 wt%.

If a lithium based salt is used as a conductive agent, the conductivity of the polyurethane may be further enhanced if the polyurethane has particular structural moieties. Thus, in one particular embodiment, the polyurethane material also includes a polyol having at least one moiety of sufficient quantity that enhances the conductivity of the polyurethane material. As such, the moiety in combination with the lithium salt provides enhanced conductivity to the polyurethane material.

The moiety present in the polyol may be capable of interacting with an ion of the alkaline salt. For instance, if the alkaline salt is a lithium salt, the lithium ion may be chelated by the moiety of the polyol. The polyurethane material includes a polyol and at least one alkaline salt. The polyol has at least one moiety selected from the group consisting of EG, DEG, tri(ethylene glycol) ("TEG"), tetra(ethylene glycol), poly(diethylene glycol), poly(ethylene oxide), poly(propylene oxide) and mixtures thereof.

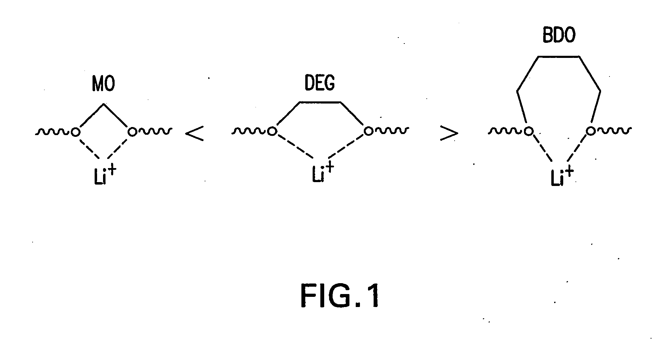

As shown in FIG. 1, polyols with moieties having at least two carbon atoms between the oxygen atoms, such as DEG and TEG, are more effective in chelating the lithium ion than those having one carbon atom between the oxygen atoms, such as MO. The polyol may have a content of the moiety (a poly(ethylene glycol) unit, which is also known as polyethylene oxide, (PEO, EG, DEG, etc.)) that is at least approximately 20% by molar. In one embodiment, the moiety is present at at least approximately 30% by molar. In another embodiment, the moiety is present at at least approximately 50% by molar, such as at least approximately 80% by molar. Too low of a content of the chelating unit of the polyol impedes the polyurethane's ability to solvate the alkaline cation, and negatively impact the alkaline ion transport efficiency, hence the dynamic electrical properties of the polyurethane.

The DEG or EG may provide sufficient spacing between the oxygen atoms to form an energetically favored 5-membered ring, which provides maximum solvation of the cation of the alkaline salt. In contrast, the MO, the BDO, or the TDO (-CH₂CH₂CH₂O-) are much weaker solvents and do not effectively chelate with the alkaline ion. Propylene oxide ("PPO"), while having similar spacing between atoms as DEG or EG, has methyl groups that sterically interfere with spatial coordination of the alkaline ion and is also a weak chelating solvent.

Regardless of whether a lithium-based conductive agent is used, the polyester polyol may be synthesized by conventional techniques, such as by a polyaddition reaction of a diol with a dicarboxylic acid. The diol may include, but is not limited to, a glycol. For instance, a polyalkylene glycol, such as DEG, TEG, tetraethylene glycol, or mixtures thereof may be used. The dicarboxylic acid may include, but is not limited to, adipic acid ("AA"), malonic acid, glutaric acid, pimelic acid, azelaic acid, sebacic acid, suberic acid, brassylic acid, succinic acid, decanedicarboxylic acid, dodecanedicarboxylic acid, 1,3-cyclohexanedicarboxylic acid, 1,4-cyclohexanedicarboxylic acid, phthalic acid, terephthalic acid, isophthalic acid, and mixtures thereof. In one particular embodiment, the polyester polyol includes AA and DEG and has the following structure:

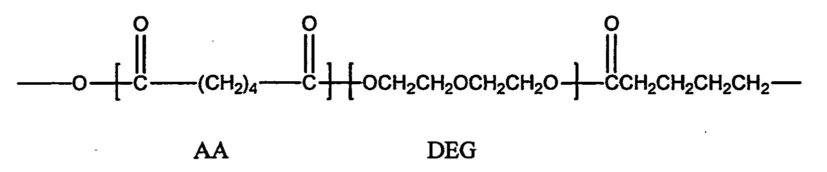

Ring-opening type of polyester polyols are also known as poly(caprolactone)s. The polyol used in the preparation of polyurethane may be polyether polyol, a polyester polyol or a mixture thereof. Exemplary polyether polyols include poly(ethylene glycol), poly(propylene glycol)and poly(tetramethylene glycol).

Isocyanate compounds may be used in the polyaddition reaction to cure or crosslink the polyol. Isocyanate compounds are known in the art and may include, but are not limited to, a diisocyanate, such as tolylenediisocyanate, 4,4-diphenylmethanediisocyanate, xylylenediisocyanate, naphthylenediiso-cyanate, paraphenylenediisocyanate, tetramethylxylenediisocyanate, hexamethylenediisocyanate, dicyclohexylmethanediisocyanate, isophoronediisocyanate, or tolidinediisocyanate.

Polyols having the moieties described above are commercially available. Examples of polyester polyols include Desmophen^{®} 1700 and Desmophen^{®} 1800, which are available from Bayer Polymers (Pittsburgh, PA), and 3500DEA, which is available from Specialty Resins Corp. (Auburn, ME). Examples of polyether polyols include Multranol^{®} from Bayer Polymers (Pittsburgh, PA) and Voranol^{®} from Dow Chemicals (Midland, MI).

In a particular embodiment, the polyurethane formulation may be:

| | |
|---|---|
| Desmophen 1700 | 60 |
| Desmophen 1800 | 40 |
| Mondur 501 | 20.2 |

All ingredients are from Bayer Polymers, Pittsburgh, PA.

The conductive agent may be present at a concentration ranging from approximately 0.01 wt% of a total weight of the polyurethane material to approximately 10 wt% of the total weight of the polyurethane material. In one particular embodiment, the conductive agent is present from approximately 0.01 wt% of the total weight of the polyurethane material to approximately 5 wt% of the total weight of the polyurethane material.

The polyurethane material may optionally include additional ingredients, depending on the desired properties of the polyurethane material. These ingredients may include, but are not limited to, cure accelerators, flame retardants, thickeners, anti-foaming agents, leveling agents, or wetting agents. These optional ingredients are known in the art and, as such, are not described in detail herein.

The polyurethane material may be formed by adding the conductive agent to the polyol or a precursor of the polyol. The conductive agent may be added to the polyol at a temperature ranging from approximately 25°C to approximately 100°C. When the conductive agent is completely dissolved, the polyol may be combined with the isocyanate composition to form the polyurethane material. If the polyurethane material utilizes any of the optional ingredients, these optional ingredients may also be combined with the conductive agent and the polyester polyol. For instance, the conductive agent may be added to a solution of the polyester polyol or a precursor of the polyester polyol. The solution may then be cured to produce the polyurethane material. The conductive agent may be blended with the polyol before the polyol is cross-linked so that the conductive agent is evenly and homogeneously blended and dispersed in the polyurethane material.

In one particular embodiment, a uniform mixture is prepared using an isocyanate component, a polyol component, the conductive agent, and other additives or foam regulating agents as known in the art. The resultant mixture is reacted and cured by heating to produce an electroconductive material wherein the conductive agent, acting as the electroconductivity imparting agent, is incorporated in the polyurethane elastomer.

In one particular embodiment, an electroconductive material is obtained. An electroconductivity imparting agent is included in polyurethane foam by adding the isocyanate component at the time of heating for reaction and cure of by a conventional, known method. The foaming method is not specifically limited, but may be selected for use from various known methods, including a method using a foaming agent or a method by intermixing bubble by mechanical agitation. The expansion ratio may be suitably determined without specific limitation.

The polyurethane material of the present invention may have a low resistivity or a high conductivity. As known in the art, resistivity is the inverse of conductivity. In one particular embodiment, the moiety in the polyurethane further enhances conductivity, thus the conductive agent may be present in the polyurethane material at a lower concentration. In other words, a lower concentration of the conductive agent may be used to achieve a desired conductivity. Therefore, the problems previously associated with large amounts of conductive agent may be ameliorated.

The polyurethane material may also have a long shelf-life or long life span. The polyurethane material may be formed into a desired shape, such as by placing the polyurethane material into an appropriately shaped mold. Alternatively, the polyurethane material may be coated, sprayed, or otherwise applied onto a substrate. For the sake of example only, the polyurethane material may be formed into a roller, plate, square block, sphere, or brush.

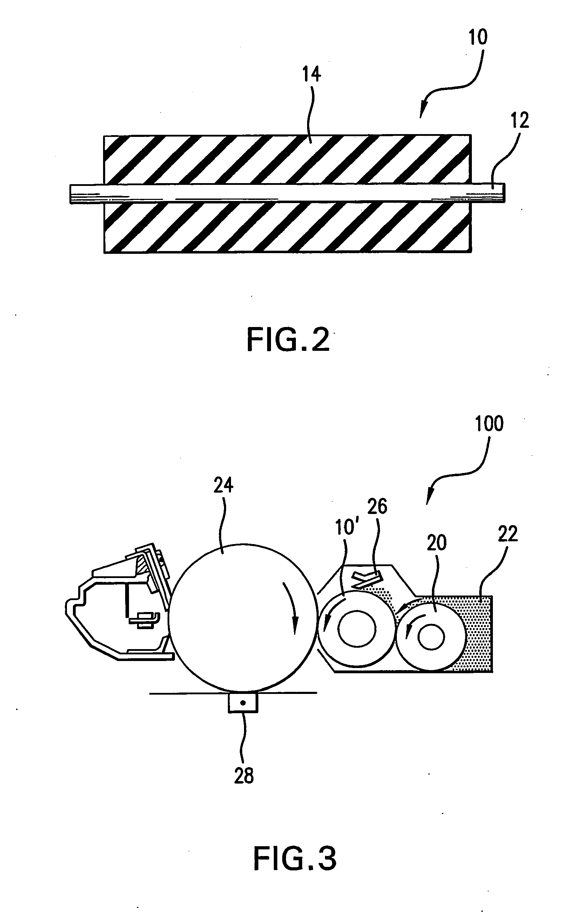

If a roller 10 is formed, the roller 10 may include a shaft 12 and a layer of the polyurethane material 14, as illustrated in FIG. 2. The polyurethane material 14 may include a solid layer of the polyurethane material 14 or a foamed layer of the polyurethane material 14. The foamed layer may be produced by a conventional technique, such as by foaming the polyisocyanate compound, using a foaming agent, or using mechanical agitation.

The shaft 12 may be a solid metal mandrel or a hollow metal cylinder formed from a conductive metal including, but not limited to, iron, copper, or stainless steel. Alternatively, the shaft 12 may be formed from a conductive plastic. The polyurethane material 14 may be applied to the outer periphery of the shaft 12 by coating the shaft 12 with the polyurethane material 14 or dipping the shaft 12 in the polyurethane material 14. The polyurethane material 14 may then be dried as known in the art. For the sake of example only, the roller 10 may be a developer roller. However, the polyurethane material 14 may also be used in other types of rollers that dissipate electrical charge, such as transfer rollers or charge rollers. The polyurethane material may also be used in image transfer blankets or paper handling devices.

The roller 10 may be used in a developer system. The developer system may also include a power supply in operative communication with the roller 10 such that, in operation, the power supply drives the roller 10. The developer system may be incorporated into an EP device 100 or an electrostatic-dissipative device, such as a liquid electrophotographic ("LEP") device or a dry electrophotographic device, as shown in FIG. 3. The LEP device may include, but is not limited to, a LEP printer or system. The dry electrophotographic device may include, but is not limited to, a laser printer.

The conductive polyurethane materials can be used in fabricating components in other industrial situations where it is desirable to control surface charge, such as to dissipate electrical or static charge. For instance, the polyurethane material may be used to coat belts, shafts, rollers, friction liners, pads, or wheels in devices where electrostatic charge management is critical. The polyurethane material may also be used to coat semiconductive materials, such as integrated circuit boards, car body parts, or machine body parts.

FIG. 3 depicts one particular embodiment of an EP device 100 using a developer roller 10' including polyurethane material of the present invention. The developer roller 10' may be located between a toner applicator roller 20 for supplying a toner 22 and a photoreceptor 24 having a latent image thereon. The developer roller 10' may be proximate the photoreceptor 24, but slightly spaced from the toner applicator roller 20. The developer roller 10', photoreceptor 24 and toner applicator roller 20 may rotate in directions shown by arrows.

The toner applicator roller 20 may supply toner 22 to the surface of the developer roller 10'. The toner 22 may then be leveled into a uniform layer by a distributing blade 26. As the developer roller 10' rotates in contact with the photoreceptor 24, the toner 22 may be impressed to the latent image on the photoreceptor 24 for visualizing the latent image. The toner image may then be transferred from the drum 24 to a recording means, such as a sheet of paper, in a transfer section 28. The EP device 100 may then be operated by any method known in the art and, therefore, the operation is not described herein.

The present invention may be further understood by the following, non-limiting examples.

### EXAMPLES

### Example 1

Polyurethane coupons comprising various concentrations of conductive agents were prepared and resistance (R) was measured; volume resistivity (ρ, ρ =R*A/L, L is the length of the specimens and A is the cross-section of the specimens along the direction of the current flow) was calculated from the resistance value.

The polyurethane coupons were prepared by combining the polyol(s) with the indicated percentage of conductive agents, as shown in Table 1, and dissolved at elevated temperature, such as at about 60-100°C. The conductive agents and polyol mixtures were combined with isocyanate, cast into a mold and allowed to cure. Resistivity of the polyurethane coupons was measured with an Agilent 4339B high resistance meter at 250V, one second charge. Dimensions of the specimens were 1 cm wide x 10 cm long x 2 mm thick.

The resistivity data for the various coupons is shown in Table 1. As known in the art, conductivity is the inverse of resistivity. Thus, the desired properties of the polyurethane material are high conductivity and low resistivity. A resistivity below 100 mega ohm-cm (E6 mega ohm-cm) is desired. Samples B, C, D, E and F are positive controls using LiClO₄, Sample A is a negative control, Sample H is a comparative example as shown in Table 1 , LiBF₄ and LiPF₆ impart conductivity in the range of LiClO₄.

Table 1. Concentration and resistivity measurements of various lithium salts.

| Sample | A | B | C | D | E | F | G | H |
|---|---|---|---|---|---|---|---|---|
| Conductive agent | | | | | | | | |
| Concentration, % | | | | | | | | |
| Li ClO₄ | 0 | 0.21 | 0.22 | 0.63 | 0.83 | 1.04 | | |
| LiPF₆ | | | | | | | 0.42 | |
| Li BF₄ | | | | | | | | 0.4 |
| Volume Resistivity, Mega Ohm-cm | 880 | 6.2 | 5.4 | 2 | 2.4 | 1 | 42.0 | 9.2 |

### Examples 2

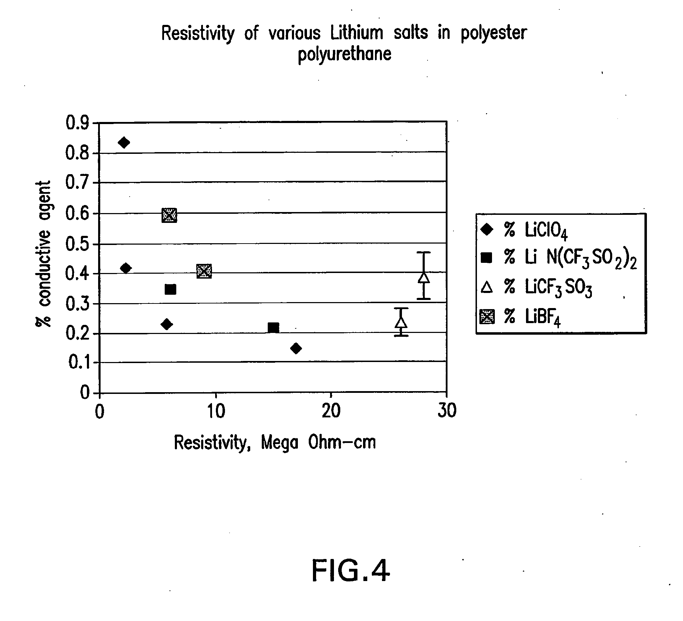

Polyurethane coupons comprising various concentrations of one of LiClO₄ or Li N (CF₃SO₂)₂ (a comparative example) were prepared by combining the indicated parts by weight of the polyol(s) with the indicated percentage of conductive agents, as shown in Table 2. The conductive agents were allowed to dissolve and the polyol mixtures were combined with isocyanate, cast into a mold and allowed to cure. Resistivity of the polyurethane coupons was measured with an Agilent 4339B high resistance meter at 250V, one second charge. Dimensions of the specimens were 1 cm wide x 10 cm long x 2 mm thick. The resistivity was plotted versus salt concentration as shown in Fig. 4 and in Table 2:

Table 2. Concentration and resistivity measurements of various lithium salts.

| | 1 | 2 | 3 | 4 | 5 | 6 | 7 | 8 |
|---|---|---|---|---|---|---|---|---|
| % LiClO₄ | 0.13 | 0.15 | 0.23 | 0.42 | 0.83 | | | |
| % Li N (CF₃SO₂)₂ | | | | | | 0.22 | 0.34 | 0.46 |
| Volume Resistivity, Mega ohm-cm | 96 | 62 | 5.8 | 2.3 | 2.2 | 15 | 6.3 | 6 |

Samples 1-5 were LiClO₄ controls. Samples 6-8 included Li N (CF₃SO₂)₂. As seen in Table 2, Li N (CF₃SO₂)₂ imparts conductivity in the range of LiClO₄ and are stable under electrochemical conditions. Concentration of conductive agent in the range of about 0.1 wt% to about 0.9 wt% produced resistivity in a desirable range.

### Example 3

Polyurethane coupons comprising various concentrations of one of LiBF₄, Li CF₃SO₃, or Na SCN (a comparative example) were prepared by combining the indicated parts by weight of the polyol(s) with the indicated percentage of conductive agents, as shown in Table 3. The conductive agents were allowed to dissolve and the polyol mixtures were combined with isocyanate, cast into a mold and allowed to cure. Resistivity of the polyurethane coupons was measured with an Agilent 4339B high resistance meter at 250V, one second charge. Dimensions of the specimens were 1 cm wide x 10 cm long x 2 mm thick. The resistivity results are shown in Table 3.

Table 3. Concentrations and resistivity measurements of various lithium salts.

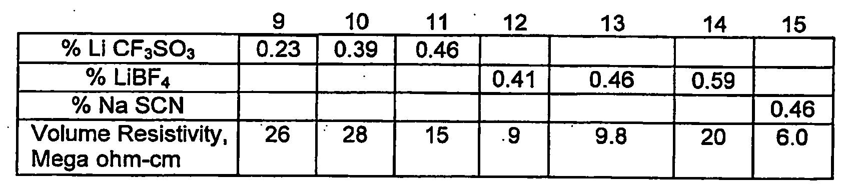

### Example 6

### Resistivity of Polyurethane Material With and Without the DEG Moiety

Polyurethane coupons were prepared that included LiClO₄ and the polyester polyols indicated in Table 5. Each of formulations A-H included a DEG polyester polyol(s) and LiClO₄ ( a comparative example). Formulations I-K included non-DEG polyester polyol(s) and LiClO₄. The polyurethane coupons were prepared by combining the indicated parts by weight of the polyester polyol(s) with the indicated percentage of LiClO₄. The materials were then cured with isocyanates, such as Mondur 501^{®} from Bayer Polymers.

**Table 5: Formulations of Polyurethane Materials and their Resistivity Data.**

| Chemical structure of polyester polyol ¹ | Tradename of polyester polyol ² | A | B | C | D | E | F | G | H | I |
|---|---|---|---|---|---|---|---|---|---|---|
| DEG-AA | 1700 (parts by weight) | | 60 | 60 | | 55 | 60 | | | |
| DEG-AA | 3500DEA (parts by weight) | | | | 50 | | | | | |
| DEG-AA | 1800 (parts by weight) | | 40 | 40 | 50 | 45 | 40 | 70 | | |
| DEG-AA | 207 (parts by weight) | 100 | | | | | | | | |
| PPO | Baytec 120P (parts by weight) | | | | | | | 30 | | |
| BDO-AA | 2505 (parts by weight) | | | | | | | | 100 | |
| EG+BDO-AA | 1037 (parts by weight) | | | | | | | | | 100 |
| | % LiClO₄ ³ | 0.23 | 0.83 | 0.42 | 0.26 | 0.21 | 0.40 | 0.20 | 0.43 | 0.68 |
| | Volume resistivity, (Mega ohm-cm) | 5.80 | 2.20 | 2.30 | 3.50 | 6.68 | 3.00 | 14.0 | 104 | 4.60 |

| | | | | | | | | | | |
|---|---|---|---|---|---|---|---|---|---|---|
| ¹ DEG=diethylene glycol, AA=adipic acid, PPO=polypropylene glycol, BDO=butanediol, EG=ethylene glycol, TMP= trimethylopropane ²1700=Desmophen^{®} 1700, 3500DEA=3500DEA, 1800=Desmophen^{®} 1800, 207=Rucoflex® 207, Baytec 120P=Baytec^{®} ENC 120P, 2505=Desmophen^{®} 2505, 1037=Desmophen^{®} 1037-55 ³ % LiClO₄ =g of LiClO₄ per (100g polyol resins + g isocyanate + g other additives) | | | | | | | | | | |

Resistance of the polyurethane coupons was measured with an Agilent 4339B high resistance meter (Agilent Technologies (Palo Alto, CA)) at 250V having a one second charge, as known in the art. The dimensions of the tested polyurethane coupons were 10 cm x 1 cm x 0.2 cm. The resistivity of each of Formulations A-I is shown in Table 5.

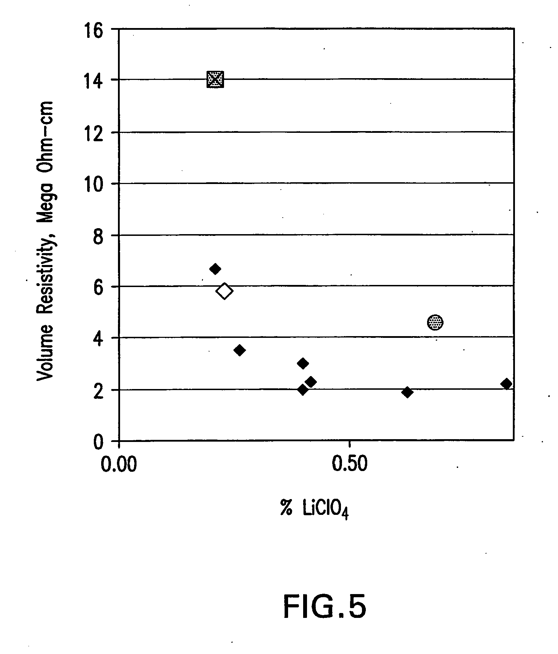

The resistivity data of each of Formulations A-G and I was plotted against the percent of LiClO₄, as shown in FIG. 5 The resistivity of Formulation H was too high to be plotted in FIG. 5 As shown in Table 5and FIG. 5 Formulations A-F, which included the polyurethane materials made with the DEG-containing polyols, had lower resistivities than those made with the non-DEG polyurethane materials (Formulations G-I) at a given LiClO₄ concentration. In FIG. 5 the diamond-shaped symbols represent the DEG-containing polyols (Formulations A-F). The open diamond-shaped symbol represents Formulation I, which is a non-DEG polyurethane material. The circle represents Formulation G which is a non-DEG polyurethane material.

Formulations C, F, and H included similar concentrations of LiClO₄ (0.40%-0.43%). Formulations C and F included DEG while formulation H was a non-DEG polyurethane material. Formulations C and F had resistivities of 2.30 Mega ohm-cm and 3.00 Mega ohm-cm, respectively. In contrast, Formulation H included BDO-AA and had a substantially higher resistivity of 104 Mega ohm-cm. Since resistivity and conductivity have an inverse relationship, higher conductivities are observed with the DEG-containing polyurethane materials.

Each of Formulations B, C, E, and F included the same DEG-containing polyester polyol with differing LiClO₄ concentrations (0.83%, 0.42%, 0.21 %, and 0.40%, respectively). A comparison of these Formulations indicates that all had a resistivity of less than approximately 7 Mega ohm-cm, which shows that the enhanced resistivities were achieved even when lower LiClO₄ concentrations were used. The resistivity reached a plateau at about 0.45% LiClO₄. At higher concentrations of LiClO₄, smaller decreases in resistivity were observed.

In summary, as shown by the resistivity data, the DEG-containing polyols provided the most efficient use of the lithium ion for conductivity. In contrast, for the non-DEG polyurethane materials, it was necessary to add additional LiClO₄ to achieve the same resistivity or amount of "mobile lithium." However, as previously discussed, using additional LiClO₄ negatively affects the polyurethane material, such as decreasing long term stability and life span.

### Example 7

### Resistivity of Polyurethane Material Including TEG

Polyurethane coupons are prepared as described in Example 6 except that the DEG-containing polyester polyols are replaced with TEG-containing polyester polyols.

Resistance of the polyurethane coupons is measured, as described in Example 6 The resistivity of the polyurethane coupons is lower than the resistivity of polyurethane coupons that do not include TEG.

## Claims

1. A method of making a conductive polyurethane material, comprising blending at least one conductive agent in a polyol, the at least one conductive agent selected from the group consisting of LiPF₆, CH₃ (C₂H₅)₃ NBF₄, (C₂H₅)₄ NBF₄ and mixtures thereof.

2. The method according to claim 1, wherein blending comprises combining from approximately 0.01% by weight ("wt%") of a total weight of the polyurethane material to approximately 10 wt% of the total weight of the polyurethane material of the at least one conductive agent with the polyol.

3. A conductive polyurethane material produced by the method according to claim 1 or 2.

4. A polyurethane material comprising a polyol and at least one conductive agent, the at least one conductive agent selected from the group consisting of LiPF₆, CH₃ (C₂H₅)₃ NBF₄, (C₂H₅)₄ NBF₄ and mixtures thereof.

5. A polyurethane material as claimed in claim 4, wherein the polyol comprises a moiety having at least two carbon atoms between the oxygen atoms.

6. A polyurethane material as claimed in claim 5, wherein the moiety is at least 20% by molar.

7. A polyurethane material as claimed in any of claims 4 to 6 wherein the polyol has at least one moiety selected from ethylene glycol, DEG or TEG

8. A polyurethane material as claimed in any of claims 4 to 7, wherein the at least one conductive agent comprises from approximately 0.01% by weight ("wt%") of a total weight of the polyurethane material to approximately 10 wt% of the total weight of the polyurethane material.

9. An electrophotographic device for forming images, comprising a conductive roller comprising the conductive polyurethane material of any of claims 3 to 8 and a photoreceptor and a toner applicator located proximate the conductive roller.

10. A roller comprising a shaft and the polyurethane material of any of claims 3 to 8 surrounding the shaft.

11. A developer system comprising:
a developer roller comprising the polyurethane material of any of claims 3 to 8, and
a power supply in operative communication with the developer roller.

## Patentansprüche

1. Ein Verfahren zum Herstellen eines leitfähigen Polyurethanmaterials, das ein Vermengen zumindest eines leitfähigen Mittels in einem Polyol aufweist, wobei das zumindest eine leitfähige Mittel aus der Gruppe ausgewählt wird, die LiPF₆, CH₃(C₂H₅)₃NBF₄, (C₂H₅)₄NBF₄ und Mischungen derselben umfasst.

2. Das Verfahren gemäß Anspruch 1, bei dem das Vermengen ein Kombinieren von zwischen etwa 0,01 Gewichtprozent ("Gew.-%") eines Gesamtgewichts des Polyurethanmaterials und etwa 10 Gew.-% des Gesamtgewichts des Polyurethanmaterials des zumindest einen leitfähigen Mittels mit dem Polyol aufweist.

3. Ein leitfähiges Polyurethanmaterial, das durch das Verfahren gemäß Anspruch 1 oder 2 hergestellt ist.

4. Ein Polyurethanmaterial, das ein Polyol und zumindest ein leitfähiges Mittel aufweist, wobei das zumindest eine leitfähige Mittel aus der Gruppe ausgewählt ist, die LiPF₆, CH₃(C₂H₅)₃NBF₄, (C₂H₅)₄NBF₄ und Mischungen derselben umfasst.

5. Ein Polyurethanmaterial gemäß Anspruch 4, bei dem das Polyol einen Anteil mit zumindest zwei Kohlenstoffatomen zwischen den Sauerstoffatomen aufweist.

6. Ein Polyurethanmaterial gemäß Anspruch 5, bei dem der Anteil zumindest 20 Mol-% beträgt.

7. Ein Polyurethanmaterial gemäß einem der Ansprüche 4 bis 6, bei dem das Polyol zumindest einen Anteil aufweist, der aus Ethylenglycol, DEG oder TEG ausgewählt ist.

8. Ein Polyurethanmaterial gemäß einem der Ansprüche 4 bis 7, bei dem das zumindest eine leitfähige Mittel zwischen etwa 0,01 Gewichtsprozent ("Gew.-%") eines Gesamtgewichts des Polyurethanmaterials und etwa 10 Gew.-% des Gesamtgewichts des Polyurethanmaterials aufweist.

9. Eine elektrophotographische Vorrichtung zum Erzeugen von Bildern, die eine leitfähige Rolle, die das leitfähige Polyurethanmaterial gemäß einem der Ansprüche 3 bis 8 aufweist, und einen Photorezeptor und einen Tonerapplikator, der sich nahe bei der leitfähigen Rolle befindet, aufweist.

10. Eine Rolle, die eine Welle und das Polyurethanmaterial gemäß einem der Ansprüche 3 bis 8, das die Welle umgibt, aufweist.

11. Ein Entwicklersystem, das folgende Merkmale aufweist:
eine Entwicklerrolle, die das Polyurethanmaterial gemäß einem der Ansprüche 3 bis 8 aufweist, und
eine Leistungsversorgung in wirksamer Kommunikation mit der Entwicklerrolle.

## Revendications

1. Procédé de fabrication d'un matériau polyuréthane conducteur, comprenant le mélange d'au moins un agent conducteur dans un polyol, l'agent conducteur étant choisi dans le groupe constitué par LiPF₆, CH₃(C₂H₅)₃ NBF₄, (C₂H₅)₄ NBF₄ et des mélanges de ceux-ci.

2. Procédé selon la revendication 1, dans lequel le mélange comprend la combinaison d'environ 0,01 % en poids d'un poids total du matériau polyuréthane à environ 10 % en poids du poids total du matériau polyuréthane de l'agent conducteur avec le polyol.

3. Matériau polyuréthane conducteur produit par le procédé selon la revendication 1 ou 2.

4. Matériau polyuréthane, comprenant un polyol et au moins un agent conducteur, l'agent conducteur étant choisi dans le groupe constitué par LiPF₆, CH₃(C₂H₅)₃ NBF₄, (C₂H₅)₄ NBF₄ et des mélanges de ceux-ci.

5. Matériau polyuréthane selon la revendication 4, dans lequel le polyol comprend une entité ayant au moins deux atomes de carbone entre les atomes d'oxygène.

6. Matériau polyuréthane selon la revendication 5, dans lequel l'entité représente au moins 20 % en moles.

7. Matériau polyuréthane selon l'une quelconque des revendications 4 à 6, dans lequel le polyol a au moins une entité choisie parmi l'éthylène-glycol, le DEG ou le TEG.

8. Matériau polyuréthane selon l'une quelconque des revendications 4 à 7, dans lequel l'agent conducteur comprend d'environ 0,01 % en poids d'un poids total du matériau polyuréthane à environ 10 % en poids du poids total du matériau polyuréthane.

9. Dispositif électrophotographique pour la formation d'images, comprenant un rouleau conducteur comprenant le matériau polyuréthane conducteur selon l'une quelconque des revendications 3 à 8 et un photorécepteur et un applicateur de toner situés à proximité du rouleau conducteur.

10. Rouleau comprenant un arbre et le matériau polyuréthane selon l'une quelconque des revendications 3 à 8 entourant l'arbre.

11. Système de développement comprenant :
◆ un rouleau de développement comprenant le matériau polyuréthane selon l'une quelconque des revendications 3 à 8, et
◆ une alimentation électrique en communication fonctionnelle avec le rouleau de développement.
